# EUROPEAN PATENT APPLICATION

(11) **EP 4 797 132 A1**
(43) Date of publication of application: **26.08.2026**
(21) Application number: 24879123.8
(22) Date of filing: 18.10.2024
(51) Int. Cl.: G06F 21/60

(54) **DATA ENCRYPTION METHOD, DATA DECRYPTION METHOD, DATA ENCRYPTION AND DECRYPTION SYSTEM, ELECTRONIC DEVICE, AND MEDIUM**

(30) Priority: 19.10.2023 CN 202311360325
(71) Applicant: Roundtable Knights Technology Co., Ltd., Shanghai 200080 (CN)
(72) Inventor: LI, Feng, Shanghai 200080 (CN); XI, Xiaoyun, Shanghai 200080 (CN)
(74) Representative: Garavelli, Paolo
(86) International application number: PCT/CN2024/125780
(87) International publication number: WO 2025/082483

(57) **Abstract**

Disclosed in the present application are a data encryption method, a data decryption method, a data encryption and decryption system, an electronic device, and a medium. The encryption method comprises: receiving an encryption request from a user, wherein the encryption request comprises plaintext data to be encrypted; loading the plaintext data into a memory of an electronic device; calling an encryption apparatus to encrypt the plaintext data on the basis of an asymmetric encryption algorithm, so as to obtain ciphertext data, wherein a public key and a private key which are paired are generated in the asymmetric encryption algorithm, and the public key is used for encrypting the plaintext data; determining a first storage path of the plaintext data and a second storage path of the ciphertext data; storing the ciphertext data in the second storage path; and deleting the plaintext data from the first storage path.

## Description

### Technical Field

The present invention relates to the technical field of information security, and in particular to a data encryption method, a data decryption method, a data encryption and decryption system, an electronic device, and a medium.

### Background

In the on-the-fly encryption technology, using disk encryption software or hardware to encrypt data on a hard disk when storing and decrypt it when reading can prevent the illegal acquisition of static plaintext data on the hard disk.

Usually, in order to ensure the security in on-the-fly encryption and decryption operations, an operating system needs to hold a key on behalf, which involves many links and easily leads to errors, and is complex in deployment, high in cost and high in maintenance cost. In addition, in this on-the-fly encryption and decryption scheme, a user has no right of choice for an encrypted and decrypted file.

### Summary of the Invention

The present application provides a data encryption method, a data decryption method, a data encryption and decryption system, an electronic device, and a medium, which can not only ensure the security of on-the-fly encryption but also pertinently protect files, thereby saving data resources.

A first aspect of the present application discloses a data encryption method, applied to an electronic device, the method comprises, receiving an encryption request of a user, wherein the encryption request comprises plaintext data to be encrypted; loading the plaintext data into the memory of the electronic device; invoking an encryption apparatus to encrypt the plaintext data based on an asymmetric encryption algorithm to obtain ciphertext data, wherein a pair of a public key and a private key is generated in the asymmetric encryption algorithm, and the public key is used to encrypt the plaintext data; determining a first storage path of the plaintext data and a second storage path of the ciphertext data; storing the ciphertext data to the second storage path; and deleting the plaintext data in the first storage path.

In a possible implementation of the above first aspect, the public key is stored in the encryption apparatus, and the private key is stored in a peripheral storage device.

In a possible implementation of the above first aspect, the method further comprises, receiving a ciphertext transfer request of a user, wherein the ciphertext transfer request comprises the ciphertext data and a second user; invoking the encryption apparatus to generate second ciphertext data based on the private key, the ciphertext data and a second public key corresponding to the second user, wherein the second public key is generated in pair with a second private key by using the asymmetric encryption algorithm; storing the second ciphertext data to a third storage path.

In a possible implementation of the above first aspect, invoking an encryption apparatus to encrypt the plaintext data based on an asymmetric encryption algorithm to obtain ciphertext data comprises, when the ciphertext data fails to be successfully obtained, deleting the plaintext data in the memory.

In a possible implementation of the above first aspect, the second storage path is generated on the basis of the first storage path based on a predetermined rule.

In a possible implementation of the above first aspect, the method further comprises, deleting the plaintext data in the memory.

In a possible implementation of the above first aspect, the method further comprises, deleting the ciphertext data in the memory.

In a possible implementation of the above first aspect, the method further comprises, invoking the ciphertext data and the plaintext data in the form of a path.

In a possible implementation of the above first aspect, the form of a path comprises one or more of a shortcut, a path alias, and a soft link.

A second aspect of the present application discloses a data decryption method, applied to an electronic device, comprising, receiving a decryption request of a user, wherein the encryption request comprises ciphertext data to be encrypted; loading the ciphertext data into the memory of the electronic device; reading a private key and invoking an encryption apparatus to decrypt the ciphertext data based on an asymmetric encryption algorithm to obtain plaintext data, wherein the private key is generated in pair with a public key in the asymmetric encryption algorithm, and the private key is used to decrypt the ciphertext data; determining a fourth storage path of the ciphertext data and a fifth storage path of the plaintext data; storing the plaintext data to the fifth storage path; and deleting the ciphertext data in the fourth storage path.

In a possible implementation of the above second aspect, the public key is stored in the encryption apparatus, and the private key is stored in a peripheral storage device.

In a possible implementation of the above second aspect, the method further comprises, verifying the private key; in a case where the private key is verified to be invalid, terminating a process and erasing all generated data.

In a possible implementation of the above second aspect, the method further comprises, determining a file extension corresponding to the plaintext data; based on the file extension, creating a new process and opening the plaintext data in the memory; in a case where the process ends, re-encrypting the plaintext data and importing to a sixth storage path.

In a possible implementation of the above second aspect, the fifth storage path is generated on the basis of the fourth storage path based on a predetermined rule.

In a possible implementation of the above second aspect, the method further comprises, deleting the ciphertext data in the memory.

In a possible implementation of the above second aspect, the method further comprises, deleting the plaintext data in the memory.

In a possible implementation of the above second aspect, the peripheral storage device comprises one or more of a USB device, a Lightning interface device, a magnetic interface device, an IC card, and a near field communication device.

A third aspect of the present application discloses a data encryption and decryption system, comprising, a ciphertext management device, a private key device, an encryption apparatus, wherein, the private key device is used to store a private key, the encryption apparatus is used for encryption and decryption operations and storing a public key, and the ciphertext management device is used to execute the data encryption method of the first aspect of the present application and the data decryption method of the second aspect of the present application.

A fourth aspect of the present application discloses an electronic device, the device comprises a memory storing computer-executable instructions and a processor; when the instructions are executed by the processor, the instructions cause the device to implement the method according to the first and second aspects of the present application.

A fifth aspect of the present application discloses a computer-readable medium, the storage medium stores one or more programs, and the one or more programs are executable by one or more processors to implement the method according to the first and second aspects of the present application.

For the data encryption method, the data decryption method, the data encryption and decryption system, the electronic device, and the medium provided by the present application, after receiving an encryption and decryption request of a user, an encryption apparatus is invoked in the memory and an asymmetric encryption algorithm is used to perform encryption and decryption. This process hands the choice right of encryption and decryption to the user and places the process of encryption at an application level accessible to the user for implementation. Wherein, system deployment of encryption is not required, which can reduce the operation complexity of encryption and decryption; and selective encryption and decryption can save resources. In addition, the use of the asymmetric encryption and decryption technology can ensure the security of on-the-fly encryption and decryption.

### Brief Description of the Drawings

FIG. 1 is a scenario diagram of an embodiment of the present application of an embodiment of the present application;
FIG. 2 is a schematic flowchart of a data encryption method 200 according to an embodiment of the present application;
FIG. 3a is a schematic diagram of a public key-private key pair according to an embodiment of the present application;
FIG. 3b is an exemplary diagram of data encryption according to an embodiment of the present application;
FIG. 4 is a schematic flowchart of a data encryption method 210 according to an embodiment of the present application;
FIG. 5 is a schematic flowchart of a ciphertext transfer method 200 according to an embodiment of the present application;
FIG. 6 is a schematic flowchart of a data decryption method 310 according to an embodiment of the present application;
FIG. 7 is a schematic diagram of changes in a display interface during a decryption process in an embodiment of the present application;
FIG. 8 is a schematic flowchart of a data decryption method 320 according to an embodiment of the present application;
FIG. 9 is a schematic flowchart of a processing method 330 of plaintext data according to an embodiment of the present application;
FIGS. 10a-10b are schematic flowcharts of state switching methods 340 and 350 according to an embodiment of the present application;
FIG. 11 is a structural block diagram of an encryption and decryption system 400 according to an embodiment of the present application;
FIG. 12 is a block diagram of an electronic device 500 according to an embodiment of the present application.

### Detailed Description of the Embodiments

The present application will be further described below with reference to specific embodiments and the accompanying drawings. It can be understood that the illustrative embodiments of the present disclosure include but are not limited to a data encryption method, a data decryption method, a data encryption and decryption system, an electronic device, and a medium, and the specific embodiments described herein are merely intended to explain the present application, rather than to limit the present application. In addition, for convenience of description, only some but not all of the structures or processes related to the present application are shown in the drawings. The acquisition, storage, use, processing, etc. of data in the technical solutions of the present application all comply with relevant provisions of national laws and regulations.

In order to make the objectives, technical solutions, and advantages of the present application clearer, the embodiments of the present application will be further described in detail below with reference to the accompanying drawings.

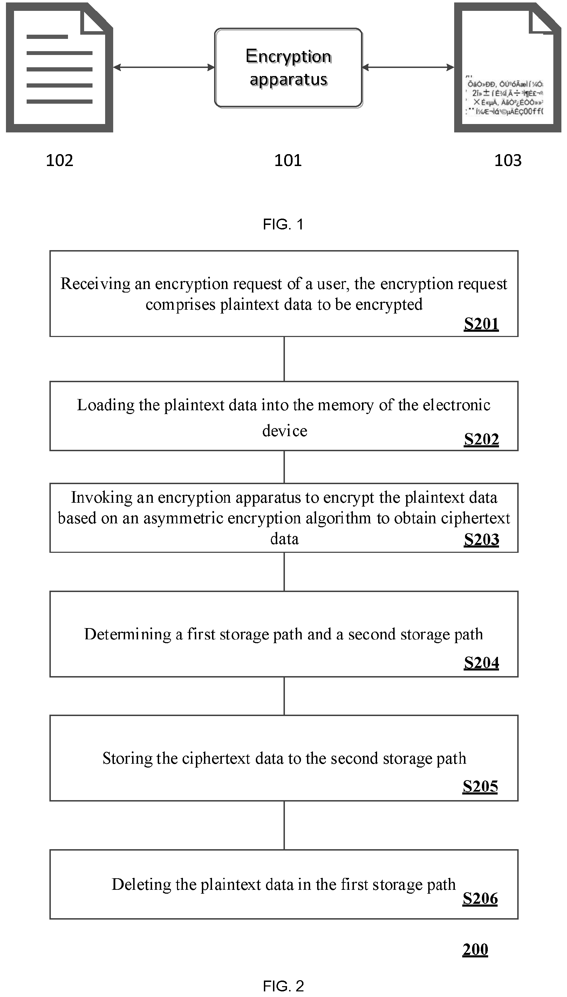

FIG. 1 shows a scenario diagram of an embodiment of the present application. The encryption apparatus 101 may automatically encrypt data 102 stored on a hard disk to obtain encrypted data 103, or automatically decrypt the encrypted data 103 to obtain the data 102. Wherein the encrypted data 103 may be in a form that cannot be opened or is opened as garbled characters. Specifically, the encryption apparatus 101 automatically encrypts the data 102 stored on the hard disk when storing and decrypts the data 102 when reading, to achieve the prevention of illegal acquisition of static plaintext data on the hard disk.

The encryption apparatus 101 may be encryption software, encryption hardware, or a combination of both. In order to achieve the purpose of automatic encryption during storage and automatic decryption during reading, the encryption apparatus 101 needs to meet the following features: 1) keeping the data 102 in an encrypted state; 2) no matter stored in any position in the hard disk, reading and writing of the data 102/encrypted data 103 must be high-speed operations; 3) the process of encryption and decryption cannot cause a significant increase in file size.

In a manual encryption scheme, a user needs to find encryption software in a computer and select a file to be encrypted/decrypted for encryption/decryption. However, in the encryption scheme using the encryption apparatus 101, automatic encryption when saving data and automatic decryption when accessing data can be performed in a background invisible to the user. By using the on-the-fly encryption and decryption scheme, the user has no burden of manually encrypting and decrypting data.

Usually, in order to implement the on-the-fly encryption and decryption operation, it is required to adopt a symmetric key scheme. In some implementations, in order to ensure the security of a symmetric key, an operating system or the encryption apparatus 101 may hold the key on behalf, rather than the user managing the key. In order to cope with all possibilities of a user using files on an operating system, the operating system or the encryption apparatus 101 holding the key on behalf needs to know and be compatible with all user software during deployment, identify its legality, and add it to a whitelist. This process involves many links and easily leads to errors, and is complex in deployment, high in cost, and high in maintenance cost. In addition, in this on-the-fly encryption and decryption scheme, the user has no right of choice for an encryption and decryption file, that is, the user cannot select a file according to his/her own will and pertinently perform encryption protection.

In addition, this key on-behalf-holding scheme needs to rely on the grading of code running levels by the operating system structurally. Current schemes are mostly based on a windows operating system, while they can rarely be implemented in other operating systems such as Linux and mac systems.

In order to solve the above problems, an embodiment of the present application provides a data encryption method: handing the choice right of encryption to a user and placing the process of encryption at an application level accessible to the user for implementation. Wherein, system deployment of encryption is not required, which can reduce the operation complexity of encryption; and selective encryption can save resources. In addition, the use of the asymmetric encryption technology can ensure the security of on-the-fly encryption.

Details of embodiments of the data encryption method according to the present application are described below with reference to FIG. 2.

As shown in FIG. 2, a data encryption method 200 according to an embodiment of the present application comprises the following steps.

In S201, receiving an encryption request of a user, the encryption request comprises plaintext data to be encrypted.

The method 200 is applied to an electronic device, and the electronic device may be one or more of a desktop computer, a notebook computer, a smartphone, a tablet computer, a server, an Internet of Things (IoT) device, a chip, or a portable wearable device. The IoT device may be one or more of a smart in-vehicle device, a smart television, a smart speaker, or a smart air conditioner. In some implementations, an application program may be installed in the electronic device, and the application program comprises one or more of an application program preset in the operating system, an application program that needs to be installed separately, and a program application that can be used without installation.

Receiving an encryption request of a user, the encryption request comprises plaintext data to be encrypted designated by the user. In some examples, the type of the plaintext data to be encrypted comprises, but is not limited to, one or more of a document, an image, an audio, and a video.

In some implementations, the user may drag or copy the plaintext data to be encrypted into the application program of the electronic device. In some other implementations, the user may input a file path of the plaintext data to be encrypted in the application program or import the plaintext data to be encrypted according to a file position index. In some implementations, the user may also right-click the data and select a corresponding encryption operation to determine the plaintext data to be encrypted.

In S202, loading the plaintext data into the memory of the electronic device.

The plaintext data may be stored in a hard disk. The plaintext data in the hard disk is loaded into the memory of the electronic device, and an encryption operation of the plaintext data is performed in the memory. In some implementations, the encryption operation may be directly performed on the plaintext data located in the memory.

In S203, invoking an encryption apparatus to encrypt the plaintext data based on an asymmetric encryption algorithm to obtain ciphertext data, wherein, a pair of a public key and a private key is generated in the asymmetric encryption algorithm, and the public key is used to encrypt the plaintext data.

Invoking the encryption apparatus 101 to encrypt the plaintext data by using the asymmetric encryption algorithm. In some implementations, in the asymmetric encryption algorithm, corresponding public key-private key pairs can be generated for different users or different plaintext data. The public key is used for encryption, and the private key is used for decryption.

It can be understood that the role of the encryption apparatus herein is not only limited to encryption, but also can decrypt the ciphertext data based on the asymmetric encryption algorithm, and it is an abbreviation for an encryption and decryption apparatus.

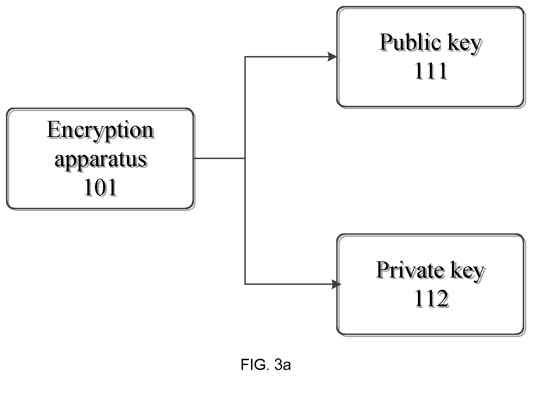

FIG. 3a shows a schematic diagram of a public key-private key pair according to an embodiment of the present application. Before running encryption, the encryption apparatus 101 may initially generate a pair of a public key 111 and a private key 112. In some examples, the encryption apparatus 101 stores the public key 111, for example, the public key 111 is protected and stored within a core of the encryption apparatus 101, for example, within a chip, software, or other medium. Except for the encryption apparatus itself, any hardware means or software means cannot read or write the public key. In this case, the public key 111 is invisible to the user, and during the encryption process, the encryption apparatus may directly invoke the public key for encryption without manual operation by the user. In some examples, the encryption apparatus 101 may provide an initialization interface, so that the private key is stored on a private key device, and the private key device may be a peripheral private key storage device.

In S204, determining a first storage path of the plaintext data and a second storage path of the ciphertext data.

Determining the first storage path used for storing the plaintext data and the second storage path used for storing the ciphertext data. In some implementations, the second storage path is generated on the basis of the first storage path based on a predetermined rule. For example, the plaintext data is stored in a folder A in the hard disk, and thus the first storage path of the plaintext data can be determined. The ciphertext data may also be stored in the folder A in the hard disk, that is, the first storage path of the plaintext data and the second storage path of the ciphertext data are located in the same folder. In some other examples, the ciphertext data may also be located in a sub-folder of the folder A, or a superior folder of the folder A.

It can be understood that the various steps in the method 200 are not limited to the order of reference numerals. For example, S204 may be executed before the encryption process of S203.

In S205, storing the ciphertext data to the second storage path.

After determining the second storage path for storing the ciphertext data, storing the ciphertext data to the second storage path. In some examples, the ciphertext data in the memory may be deleted. In some other examples, other processing may be performed on the ciphertext data in the memory, for example, re-encrypting or modifying to be irreproducible.

In S206, deleting the plaintext data in the first storage path.

In some implementations, after the plaintext data in the first storage path is deleted, the ciphertext data of the second storage path in the hard disk appears to replace the plaintext data in the original hard disk. In some implementations, when the first storage path and the second storage path are consistent, the ciphertext data may be used to overwrite the plaintext data. In some implementations, the plaintext data in the memory may also be deleted.

In the method 200, after receiving an encryption request for plaintext data of a user, the encryption apparatus is invoked in the memory and an asymmetric encryption algorithm is used to encrypt the plaintext data to obtain ciphertext data. And deleting the plaintext data in the file path originally storing the plaintext data, and saving the ciphertext data in another storage path to implement on-the-fly encryption. This process hands the choice right of encryption to the user and places the process of encryption at an application level accessible to the user for implementation. Wherein, system deployment of encryption is not required, which can reduce the operation complexity of encryption; and selective encryption can save resources. In addition, the use of the asymmetric encryption technology can ensure the security of on-the-fly encryption.

In some implementations, the ciphertext data and the plaintext data may be invoked in the form of a path. The form of a path comprises one or more of a shortcut, a path alias, and a soft link. In some examples, the ciphertext data/plaintext data within the path may be read into the memory, or the path is directly input into the encryption apparatus. In some examples, parameters may be set for the path shortcut, path alias, or soft link, to invoke encrypted data before the corresponding application program runs.

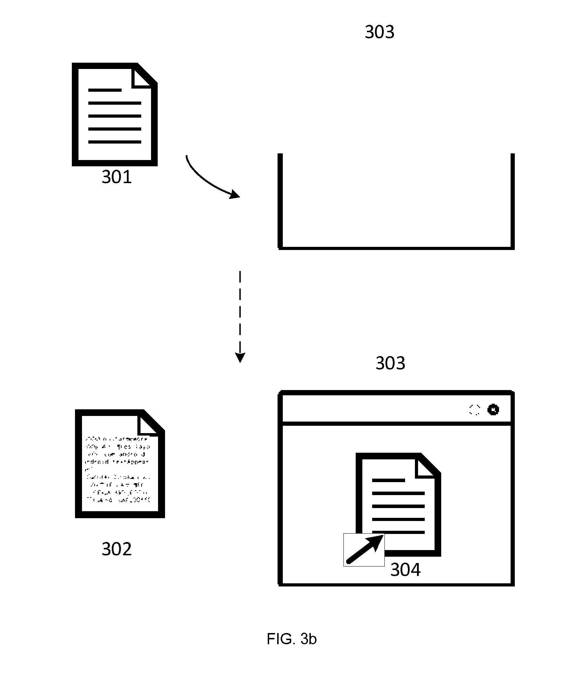

FIG. 3b shows an example of data encryption according to an embodiment of the present application. Ciphertext data is normally displayed in an operating system before encryption (301). After a user drags the plaintext data to a ciphertext management interface 303, the plaintext data is encrypted. The encrypted ciphertext data is displayed as garbled characters in the operating system (302). In the ciphertext management interface 303, the ciphertext data is displayed in the form of a shortcut (304). In the example of FIG. 3b, interface changes of the ciphertext management interface 303 before and after encryption can occur in a relatively small amount of time, for example, a few milliseconds.

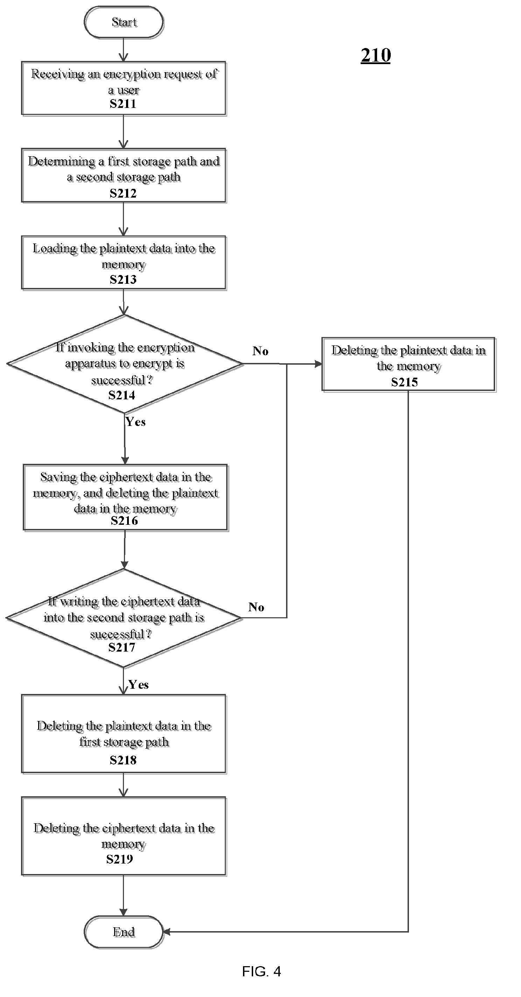

FIG. 4 shows a flowchart of a data encryption method 210 according to an embodiment of the present application. The method 210 is a further refinement of the method 200, comprising the following steps.

In S211, receiving an encryption request of a user. S211 is similar to S201 in the method 200, and details are not described herein again.

In S212, determining a first storage path of the plaintext data and a second storage path of the ciphertext data. S212 is similar to S204 in the method 200, and details are not described herein again.

In S213, loading the plaintext data into the memory of the electronic device. S213 is similar to S202 in the method 200, and details are not described herein again.

In S214, invoking the encryption apparatus to encrypt the plaintext data, and if the encryption is successful, proceeding to S216, otherwise proceeding to S215. During the encryption process, if a working state of the encryption apparatus is abnormal or a correct public key is not used, encryption failure will result.

In S215, when the encryption of the plaintext data fails, deleting the plaintext data in the memory. After S215, a related process can be ended.

In S216, saving the ciphertext data in the memory, and deleting the plaintext data in the memory.

In S217, writing the ciphertext data into the second storage path, and if the writing is successful, proceeding to S218, otherwise proceeding to S215.

In S218, deleting the plaintext data in the first storage path. After the plaintext data in the first storage path is deleted, the ciphertext data located in the second storage path may replace the plaintext data in the first storage path for display, as shown by 302 in FIG. 3b. In some implementations, when the first storage path and the second storage path are consistent, the ciphertext data may be used to overwrite the plaintext data.

In S219, deleting the ciphertext data in the memory. After the encryption is successful, both the plaintext data and the ciphertext data in the memory can be deleted to improve security and reduce memory occupation.

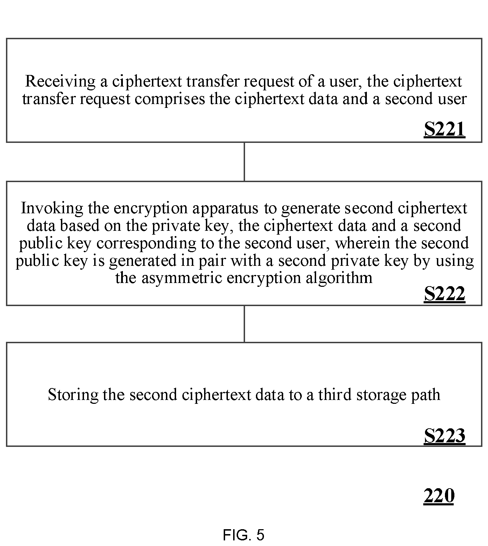

Returning to the scenario of FIG. 3b, the ciphertext data is displayed in the form of a shortcut in the ciphertext management interface 303. If it is necessary to display the ciphertext data normally or perform further operations, such as modification, copying, cutting, and transfer, in the ciphertext management interface 303, an additional private key device is required for implementation. Regarding the transfer of ciphertext data, FIG. 5 shows a flowchart of a ciphertext transfer method 200 according to an embodiment of the present application, which can convert ciphertext data of one user into ciphertext data of another user without decryption, comprising the following steps.

In S221, receiving a ciphertext transfer request of a user, the ciphertext transfer request comprises the ciphertext data and a second user.

Still taking FIG. 3b as an example, user M may select the ciphertext data to be transferred and the receiving user N in the ciphertext management interface. After the ciphertext data to be transferred is determined, a corresponding storage path can be determined. In some examples, the user may drag the ciphertext data to be transferred to a position corresponding to the user N in the ciphertext management interface, or the user may right-click the ciphertext data to be transferred to select a ciphertext transfer option.

In S222, invoking the encryption apparatus to generate second ciphertext data based on the private key, the ciphertext data and a second public key corresponding to the second user, wherein the second public key is generated in pair with a second private key by using the asymmetric encryption algorithm.

After detecting that the private key of user M passes verification, invoking the encryption apparatus to encrypt the ciphertext data based on the ciphertext data and the public key of user N to generate the second ciphertext data. Wherein the public key of user N is generated in pair with the corresponding private key based on the asymmetric encryption algorithm.

In S223, storing the second ciphertext data to a third storage path.

Storing the ciphertext data after the ciphertext transfer to a new storage path. In S221-S223, the ciphertext data of user M is not decrypted, but is directly converted into the ciphertext data of user N, improving the security of ciphertext transfer.

In some implementations, a transfer form of the ciphertext may be copy, that is, after generating the ciphertext data of user N based on the ciphertext data of user M, the ciphertext data of user M may still be retained. In some implementations, a transfer form of the ciphertext may be cut, that is, after generating the ciphertext data of user N based on the ciphertext data of user M, the ciphertext data of user M will be deleted, that is, the plaintext data in the second storage path will be deleted.

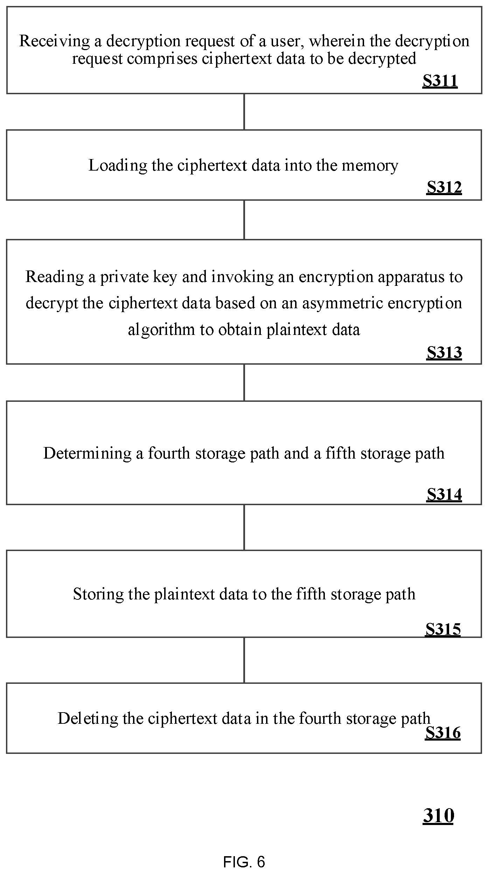

FIG. 6 shows a flowchart of a data decryption method 310 according to an embodiment of the present application, comprising the following steps.

In S311, receiving a decryption request of a user, wherein the encryption request comprises ciphertext data to be encrypted.

Receiving a decryption request of a user, the decryption request comprises ciphertext data to be decrypted designated by the user. Wherein, the ciphertext data may be obtained by the encryption of the data encryption method of the present application.

In some implementations, the user may drag or copy the ciphertext data to be decrypted into the application program of the electronic device. In some other implementations, the user may input a file path of the ciphertext data to be decrypted in the application program or import the ciphertext data to be decrypted according to a file position index. In some implementations, the user may also right-click the data and select a corresponding decryption operation to determine the ciphertext data to be decrypted.

In S312, loading the ciphertext data into the memory of the electronic device.

The ciphertext data may be stored in a hard disk. The ciphertext data in the hard disk is loaded into the memory of the electronic device, and a decryption operation of the ciphertext data is performed in the memory. In some implementations, the decryption operation may be directly performed on the ciphertext data located in the memory.

In S313, reading a private key and invoking an encryption apparatus to decrypt the ciphertext data based on an asymmetric encryption algorithm to obtain plaintext data, wherein the private key is generated in pair with a public key in the asymmetric encryption algorithm, and the private key is used to decrypt the ciphertext data.

Invoking the encryption apparatus to encrypt the plaintext data using the asymmetric encryption algorithm and the public key, and decrypt the ciphertext data using the private key generated in pair with the public key. In some implementations, in the asymmetric encryption algorithm, corresponding public key-private key pairs can be generated for different users or different plaintext data. In some implementations, a public key device is stored in the encryption apparatus, and a private key device is stored in a peripheral storage device.

In S314, determining a fourth storage path of the ciphertext data and a fifth storage path of the plaintext data.

Determining the fourth storage path used for storing the ciphertext data and the fifth storage path used for storing the plaintext data. In some implementations, the fifth storage path is generated on the basis of the fourth storage path based on a predetermined rule. For example, the ciphertext data is stored in a folder B in the hard disk, and thus the fourth storage path of the ciphertext data can be determined. The plaintext data may also be stored in the folder B in the hard disk, that is, the fourth storage path of the ciphertext data and the fifth storage path of the plaintext data are located in the same folder. In some other examples, the plaintext data may also be located in a sub-folder of the folder B, or a superior folder of the folder B.

It can be understood that the various steps in the method 310 are not limited to the order of reference numerals. For example, S314 may be executed before the encryption process of S313.

In S315, storing the plaintext data to the fifth storage path.

After determining the fifth storage path for storing the plaintext data, storing the plaintext data to the fifth storage path. In some examples, the plaintext data in the memory may be deleted. In some other examples, other processing may be performed on the plaintext data in the memory, for example, re-encrypting or modifying to be irreproducible.

In S316, deleting the ciphertext data in the fourth storage path.

In some implementations, after the ciphertext data in the fourth storage path is deleted, the plaintext data of the fifth storage path in the hard disk appears to replace the ciphertext data in the original hard disk. In some implementations, when the fourth storage path and the fifth storage path are consistent, the plaintext data may be used to overwrite the ciphertext data. In some implementations, the ciphertext data in the memory may also be deleted.

In the method 310, after receiving a decryption request for ciphertext data of a user, reading a private key and invoking the encryption apparatus in the memory and using an asymmetric encryption algorithm to decrypt the ciphertext data to obtain plaintext data. And deleting the ciphertext data in the file path originally storing the ciphertext data, and saving the plaintext data in another storage path to implement on-the-fly encryption. This process hands the choice right of decryption to the user and places the process of decryption at an application level accessible to the user for implementation. Wherein, system deployment of decryption is not required, which can reduce the operation complexity of encryption.

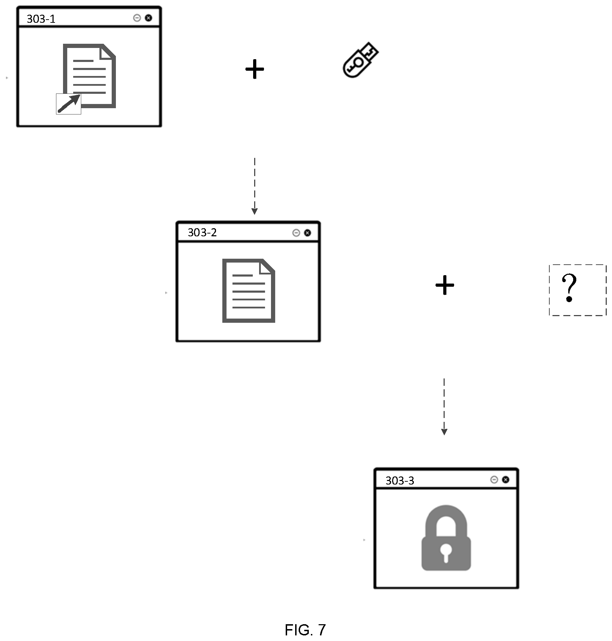

In addition, through the control of the private key, the security of data can be ensured. Reference can be made to the example in FIG. 7. FIG. 7 shows changes in a display interface during a decryption process in an embodiment of the present application.

In the ciphertext management interface, the ciphertext data is displayed in the form of a shortcut (303-1). When the ciphertext management interface receives a decryption request of a user, and detects that the private key device successfully reads the private key, the shortcut may be opened to display plaintext content therein (302-2). The user can view the plaintext content. During this period, the state of the private key can be continuously monitored, and if the private key device is disconnected midway, the ciphertext management interface will display a locked state (303-3). During this period, the user can intuitively feel the interface switching of the ciphertext manager.

In some implementations, the private key device may be one or more of a USB device, a Lightning interface device, a magnetic interface device, an IC card, and a near field communication (NFC) device. Wherein, versions of interfaces of the USB device include but are not limited to USB Type-A, USB Type-B or USB Type-C. In some examples, the reading of the private key may also not be limited to a physical private key device, for example, the private key may be read through fingerprint recognition or facial recognition or the like.

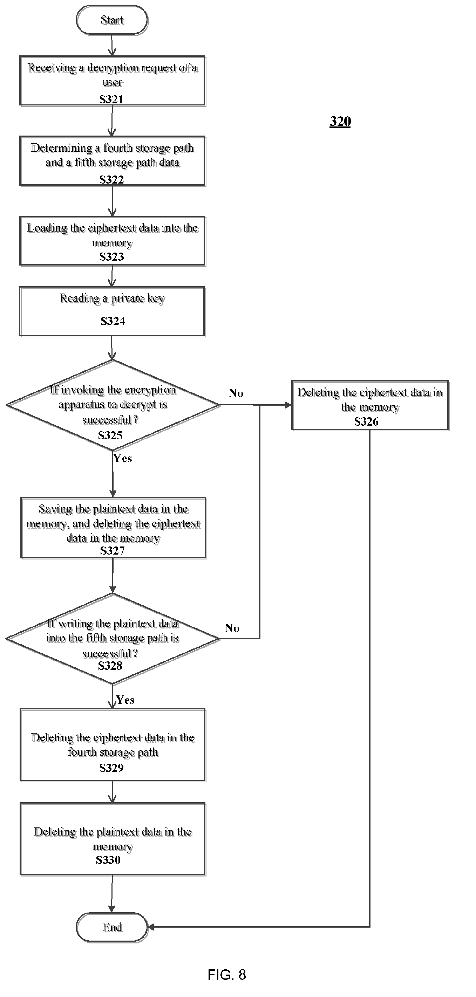

FIG. 8 shows a flowchart of a data decryption method 320 according to an embodiment of the present application. The method 320 is a further refinement of the method 310, comprising the following steps.

In S321, receiving a decryption request of a user. S321 is similar to S311 in the method 310, and details are not described herein again.

In S322, determining a fourth storage path of the ciphertext data and a fifth storage path of the plaintext data. S322 is similar to S314 in the method 310, and details are not described herein again.

In S323, loading the ciphertext data into the memory of the electronic device. S323 is similar to S312 in the method 310, and details are not described herein again.

In S324, reading a private key.

Reading the private key according to a device where the private key is stored or a user feature recognition device.

In S325, invoking the encryption apparatus to decrypt the ciphertext data, and if the decryption is successful, proceeding to S327, otherwise proceeding to S326. During the decryption process, if a working state of the decryption apparatus is abnormal or a private key reading state is abnormal, decryption failure will result.

In S326, when the decryption of the ciphertext data fails, deleting the ciphertext data in the memory. After S326, a related process can be ended.

In S327, saving the plaintext data in the memory, and deleting the ciphertext data in the memory.

In S328, writing the plaintext data into the fifth storage path, and if the writing is successful, proceeding to S329, otherwise proceeding to S326.

In S329, deleting the ciphertext data in the fourth storage path. After the ciphertext data in the fourth storage path is deleted, the plaintext data located in the fifth storage path may replace the ciphertext data in the fourth storage path for display, as shown by 303-2 in FIG. 7. In some implementations, when the fourth storage path and the fifth storage path are consistent, the plaintext data may be used to overwrite the ciphertext data.

In S330, deleting the plaintext data in the memory. After the decryption is successful, both the plaintext data and the ciphertext data in the memory can be deleted to improve security and reduce memory occupation.

Returning to FIG. 7, the data in the ciphertext management interface 303-2 is in a state usable by the user. The user can perform all operations supported by the corresponding plaintext data on the data therein. Although the ciphertext data opened through the shortcut is displayed as plaintext, in some implementations, the data in the storage path of the ciphertext data in the hard disk is still in an encrypted state. If the user needs to save operations on the plaintext in the ciphertext management interface 303-2, it is required to encrypt again. The user can implement plaintext use and ciphertext storage in the ciphertext management interface. In some implementations, if the private key device is disconnected midway, the user's modifications to the plaintext content may be saved, and re-encrypted and new ciphertext data is written into a corresponding storage path.

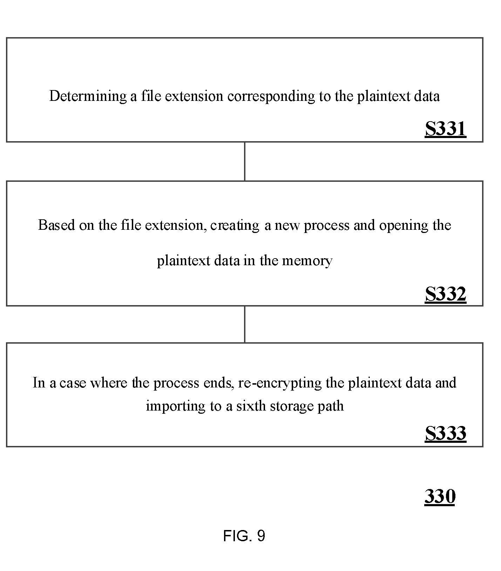

FIG. 9 shows a flowchart of a processing method 330 of plaintext data according to an embodiment of the present application, comprising the following steps:
In S331, determining a file extension corresponding to the plaintext data.

The plaintext data here is obtained by invoking the encryption apparatus to decrypt the ciphertext data. For example, the plaintext data is plaintext loaded in the memory through the steps of S321-S325 in the method 320.

The plaintext data may be in multiple forms, and the format of the plaintext data and an opened application can be determined according to its file extension. For example, the file extension may be any one of ".txt", ".doc", ".pdf", ".jpg", and ".avi".

In S332, based on the file extension, creating a new process and opening the plaintext data in the memory.

After the file extension is determined, an application opening the plaintext data can be determined. The created new process uses the application corresponding to the file extension to open the plaintext data in the memory. It can be understood that the "process" herein is a broad concept and may be a child process. For example, in some implementations, a new child process may be created in an existing process to open the plaintext data in the memory.

For example, when the file extension is ".txt", creating a new process of a document reader to open the plaintext data; when the file extension is ".pdf", creating a new process of a PDF document reader to open the plaintext data.

In S333, in a case where the process ends, re-encrypting the plaintext data and importing to a sixth storage path.

The user can perform multiple operations, such as copying, cutting, and pasting, on the plaintext data in the newly created process. In a case where the operations are completed and the process ends, the updated plaintext data may be re-encrypted, for example, encrypted into second ciphertext data. And the second ciphertext data is stored and imported to the sixth storage path. In some examples, the storage path of the new ciphertext data (that is, the sixth storage path) may be consistent with the storage path of the original ciphertext (that is, the fourth storage path). In some other examples, the sixth storage path may not be consistent with the fourth storage path.

In the method 330, during the decryption process, the user can normally and smoothly open decrypted data, and when operations on the decrypted data are completed, the electronic device will encrypt it to obtain new encrypted data. The user can use the plaintext normally, and the electronic device will encrypt the modified plaintext again, so that plaintext use and ciphertext storage are implemented imperceptibly to the user.

Returning to FIG. 7, in some implementations, the ciphertext manager interface can perform real-time monitoring on a corresponding interface of the private key device. When a monitored signal is abnormal, a private key verification request may be sent to the private key device. If the private key verification is successful, continuing the current process; if failed, ending the process and erasing all generated data.

In FIG. 7, in the scenario of the interface 303-2, the private key device has been connected and the private key verification is successful. If either of these two conditions is not met, the interface 303 switches to another state. For the former, the electronic device is in an authorized state, and the user can execute an encryption operation, a ciphertext-related operation, a decryption operation, and a ciphertext transfer operation. Wherein, the ciphertext-related operation may include ciphertext data sharing and ciphertext data uploading to a cloud. For the latter, the electronic device is in a public state, and permissions of the user will be restricted. In some examples, in the public state, the user cannot perform any operations on data in the ciphertext management interface, as shown by 303-3 in FIG. 7. In some other examples, in the public state, the user can only execute the encryption operation and the ciphertext-related operation.

In some examples, a state variable may be set, and different values are assigned to the state variable under different states. For example, a state variable secretKeyAuth may be set, whose type is Boolean, a value of the state variable is False in the public state, and a value of the state variable is True in the authorized state. During the running period of the electronic device or the ciphertext manager in the electronic device, the private key is continuously monitored, and once a monitored signal is abnormal, a private key verification request is sent to the encryption apparatus, and a corresponding True/False value is directly assigned to the state variable according to a result of the verification.

In some implementations, when the electronic device is in the authorized state, files in the ciphertext management interface may be displayed in the form of a thumbnail. For example, similar to an ordinary browser interface, files such as an image, a PDF document, and a video in the ciphertext management interface may be displayed in the form of a thumbnail, to provide an imperceptible usage experience to the user.

The display of the thumbnail can be implemented in a variety of ways. In some examples, when the electronic device is in the authorized state, the encryption apparatus may be invoked to completely decrypt the ciphertext data on the hard disk into the memory, and display the decrypted plaintext data as a preview thumbnail. In some other examples, when the electronic device is in the authorized state, the encryption apparatus may be invoked to partially decrypt the ciphertext data on the hard disk into the memory to only obtain partial plaintext data necessary for generating the thumbnail, and display the partial plaintext data as a preview thumbnail.

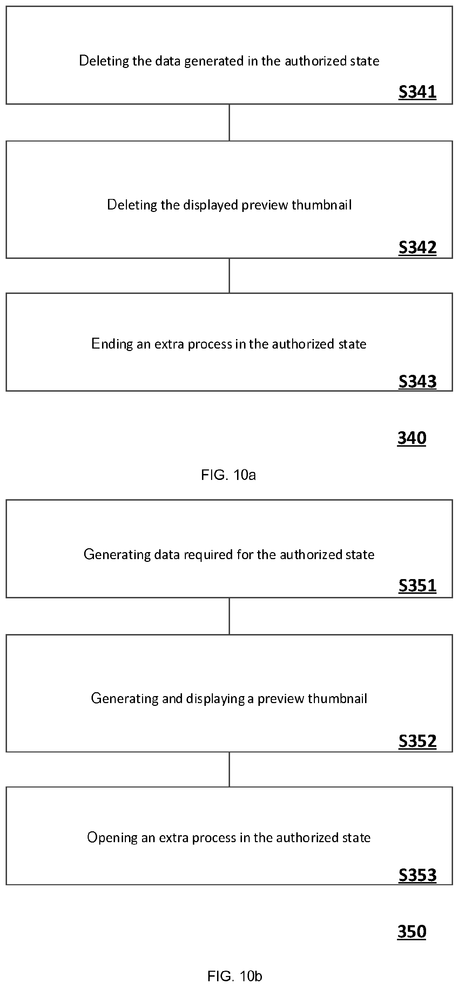

Regarding the switching of the two states, FIGS. 10a-10b show schematic flowcharts of state switching methods 340 and 350 according to an embodiment of the present application. The various steps in the method 340 and the method 350 are specifically described below.

In the method 340, the electronic device switches from the authorized state to the public state. In S341, deleting the data generated in the authorized state. All plaintext data decrypted in the memory in the authorized state, or partial plaintext data decrypted may be deleted.

In S342, deleting the displayed preview thumbnail. Making the preview thumbnail disappear in the ciphertext manager interface.

In S343, ending an extra process in the authorized state. Ending other processes in the authorized state.

Correspondingly, in the method 350, the electronic device switches from the public state to the authorized state. In S351, generating data required for the authorized state. For example, generating all plaintext data decrypted, or partial plaintext data decrypted used for generating a thumbnail.

In S352, generating and displaying a preview thumbnail. Generating and displaying a thumbnail corresponding to the plaintext data in the ciphertext manager interface.

In S353, opening an extra process in the authorized state. Restoring other processes except for a thumbnail generation process for executing user's operations.

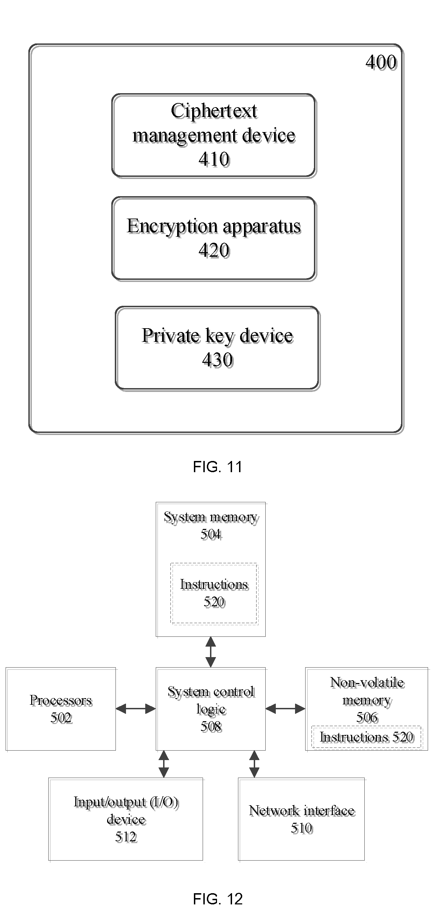

The present application further discloses a data encryption and decryption system, referring to 400 in FIG. 11. The data encryption and decryption system 400 comprises a ciphertext management device 410, an encryption apparatus 420, and a private key device 430. The private key device 430 is used to store a private key, the encryption apparatus 420 is used for encryption and decryption operations and storing a public key, and the ciphertext management device 410 is used to execute the data encryption method and the data decryption method described above.

Referring now to FIG. 12, referring now to FIG. 5, a block diagram of an electronic device 500 according to an embodiment of the present application is shown.

The electronic device 500 may comprise one or more processors 502, system control logic 508 connected to at least one of the processors 502, system memory 504 connected to the system control logic 508, non-volatile memory (NVM) 506 connected to the system control logic 508, and a network interface 510 connected to the system control logic 508. The processor 502 may comprise one or more single-core or multi-core processors. The processor 502 may comprise any combination of a general-purpose processor and a special-purpose processor (for example, a graphics processor, an application processor, a baseband processor, etc.). In the embodiments herein, the processor 502 may be configured to execute one or more embodiments according to various embodiments shown in FIGS. 2-10.

In some embodiments, the system control logic 508 may comprise any appropriate interface controller, to provide any appropriate interface to at least one of the processors 502 and/or any appropriate device or component communicating with the system control logic 508.

In some embodiments, the system control logic 508 may comprise one or more memory controllers to provide an interface connected to the system memory 504. The system memory 504 may be used for loading and storing data and/or instructions. In some embodiments, the memory 504 of the device 500 may comprise any appropriate volatile memory, for example, appropriate dynamic random access memory (DRAM).

The NVM/memory 506 may comprise one or more tangible, non-transitory computer-readable media used for storing data and/or instructions. In some embodiments, the NVM/memory 506 may comprise any appropriate non-volatile memory such as a flash memory and/or any appropriate non-volatile storage device, for example, at least one of an HDD (Hard Disk Drive), a CD (Compact Disc) drive, and a DVD (Digital Versatile Disc) drive.

The NVM/memory 506 may comprise a part of storage resources installed on an apparatus of the device 500, or it may be accessible by the device but not necessarily a part of the device. For example, the NVM/memory 506 may be accessed via a network through the network interface 510.

In particular, the system memory 504 and the NVM/memory 506 may respectively comprise: a temporary copy and a permanent copy of instructions 520. The instructions 520 may comprise: instructions that, when executed by at least one of the processors 502, cause the device 500 to implement the methods shown in FIGS. 2, 4-6, and 8-10b. In some embodiments, the instructions 520, hardware, firmware, and/or software components thereof may additionally/alternatively be placed in the system control logic 508, the network interface 510, and/or the processor 502.

The network interface 510 may comprise a transceiver, used to provide a radio interface for the device 500, and further communicate with any other appropriate device (e.g., a front-end module, an antenna, etc.) via one or more networks. In some embodiments, the network interface 510 may be integrated into other components of the device 500. For example, the network interface 510 may be integrated in at least one of the processor 502, the system memory 504, the NVM/memory 506, and a firmware device (not shown) having instructions, and when at least one of the processors 502 executes the instructions, the device 500 implements one or more of the various embodiments shown in FIGS. 2-10. The network interface 510 may further comprise any appropriate hardware and/or firmware to provide a multiple-input multiple-output radio interface. For example, the network interface 510 may be a network adapter, a wireless network adapter, a telephone modem, and/or a wireless modem.

In one embodiment, at least one of the processors 502 may be packaged together with logic for one or more controllers of the system control logic 508 to form a System in Package (SiP). In one embodiment, at least one of the processors 502 may be integrated on the same die with logic for one or more controllers of the system control logic 508 to form a System on Chip (SoC).

The device 500 may further comprise: an input/output (I/O) device 512. The I/O device 512 may comprise a user interface to enable a user to interact with the device 500; the design of a peripheral component interface enables a peripheral component to also interact with the device 500.

In some embodiments, the user interface may comprise but is not limited to a display (e.g., a liquid crystal display, a touch screen display, etc.), a speaker, a microphone, one or more cameras (e.g., a still image camera and/or a video camera), a flashlight (e.g., a light-emitting diode flash), and a keyboard.

In some embodiments, the peripheral component interface may comprise but is not limited to a non-volatile memory port, an audio jack, and a power interface.

The method implementations of the present application can be implemented by software, magnetic parts, firmware, or the like.

Program code may be applied to input instructions to perform the functions described herein and generate output information. The output information may be applied to one or more output devices in a known manner. For the purpose of the present application, a processing system comprises any system having a processor, such as, for example, a digital signal processor (DSP), a microcontroller, an application-specific integrated circuit (ASIC), or a microprocessor.

The program code may be implemented in a high-level procedural or object-oriented programming language to communicate with a processing system. If required, the program code may also be implemented in assembly language or machine language. In fact, the mechanisms described herein are not limited to the scope of any specific programming language. In any case, the language may be a compiled or interpreted language.

One or more aspects of at least one embodiment may be implemented by representative instructions stored on a computer-readable storage medium, which represent various logic within the processor, and which, when read by a machine, cause the machine to fabricate logic for executing the techniques described herein. Such representations, known as "IP cores", may be stored on a tangible, computer-readable storage medium and supplied to various customers or manufacturing facilities for loading into the manufacturing machines that actually fabricate the logic or processor.

An embodiment of the present application discloses a computer-readable medium, storing one or more programs executable by one or more processors, to implement the method of the present application.

An embodiment of the present application discloses a computer program product, comprising a computer program that, when executed by a processor, implements the method of the present application.

The implementations of the present application have been described above by means of specific embodiments, and those skilled in the art can easily understand other advantages and effects of the present application from the contents disclosed in the present specification. Although the description of the present application is presented in conjunction with preferred embodiments, this does not mean that the features of the present invention are limited to the implementations. On the contrary, the purpose of introducing the invention in conjunction with the implementations is to cover other options or modifications that may be extended based on the claims of the present application. To provide an in-depth understanding of the present application, many specific details are included in the above description. The present application may also be implemented without using these details. In addition, in order to avoid confusing or obscuring the focus of the present application, some specific details will be omitted from the description. It should be noted that, without conflict, the embodiments in the present application and the features in the embodiments can be combined with each other.

Furthermore, various operations will be described as multiple discrete operations in a manner that is most helpful in understanding the illustrative embodiments; however, the order of description should not be construed to imply that these operations must be order-dependent. In particular, these operations do not need to be executed in the order of presentation.

Unless the context requires otherwise, the terms "comprising", "having" and "including" are synonymous. The phrase "A/B" means "A or B". The phrase "A and/or B" means "(A and B) or (A or B)".

In some cases, the disclosed embodiments may be implemented in hardware, firmware, software, or any combination thereof. The disclosed embodiments may also be implemented as instructions carried or stored on one or more transitory or non-transitory machine-readable (e.g., computer-readable) storage media, which may be read and executed by one or more processors. For example, instructions may be distributed via a network or via other computer-readable media. Thus, a machine-readable medium may include any mechanism for storing or transmitting information in a form readable by a machine (e.g., a computer), but is not limited to, a floppy disk, an optical disc, a compact disc, a read-only memory (CD-ROM), a magneto-optical disc, a read-only memory (ROM), a random access memory (RAM), an erasable programmable read-only memory (EPROM), an electrically erasable programmable read-only memory (EEPROM), a magnetic or optical card, a flash memory, or a tangible machine-readable memory for transmitting information over the Internet via electrical, optical, acoustical or other forms of propagated signals. Therefore, the machine-readable medium includes any type of machine-readable medium suitable for storing or transmitting electronic instructions or information in a form readable by a machine (e.g., a computer).

In the drawings, some structural or method features are shown in a specific arrangement and/or order. However, it should be understood that such specific arrangement and/or ordering may not be required. In some embodiments, these features may be arranged in a manner and/or order different from that shown in the illustrative drawings. In addition, the inclusion of a structural or method feature in a specific drawing is not meant to imply that such feature is required in all embodiments, and in some embodiments, these features may not be included or may be combined with other features.

It should be understood that although the terms "first", "second", etc. may be used herein to describe various units or data, these units or data should not be limited by these terms. The use of these terms is merely to distinguish one feature from another. For example, without departing from the scope of the exemplary embodiments, a first feature could be termed a second feature, and similarly, a second feature could be termed a first feature. It should be noted that in this specification, similar reference numerals and letters refer to similar items in the following drawings, and therefore, once an item is defined in one drawing, it does not need to be further defined and explained in subsequent drawings. Although the present invention has been illustrated and described with reference to certain preferred embodiments of the present invention, those of ordinary skill in the art should understand that various changes in form and details can be made thereto without departing from the spirit and scope of the present invention.

## Claims

1. A data encryption method, applied to an electronic device, **characterized in that** the method comprises,
receiving an encryption request of a user, wherein the encryption request comprises plaintext data to be encrypted;
loading the plaintext data into the memory of the electronic device;
invoking an encryption apparatus to encrypt the plaintext data based on an asymmetric encryption algorithm to obtain ciphertext data, wherein a pair of a public key and a private key is generated in the asymmetric encryption algorithm, and the public key is used to encrypt the plaintext data;
determining a first storage path of the plaintext data and a second storage path of the ciphertext data;
storing the ciphertext data to the second storage path; and
deleting the plaintext data in the first storage path.

2. The method according to claim 1, **characterized in that** the public key is stored in the encryption apparatus, and the private key is stored in a peripheral storage device.

3. The method according to claim 2, **characterized in that** the method further comprises, receiving a ciphertext transfer request of a user, wherein the ciphertext transfer request comprises the ciphertext data and a second user;
invoking the encryption apparatus to generate second ciphertext data based on the private key, the ciphertext data and a second public key corresponding to the second user, wherein the second public key is generated in pair with a second private key by using the asymmetric encryption algorithm;
storing the second ciphertext data to a third storage path.

4. The method according to claim 1, **characterized in that** invoking an encryption apparatus to encrypt the plaintext data based on an asymmetric encryption algorithm to obtain ciphertext data comprises, when the ciphertext data fails to be successfully obtained, deleting the plaintext data in the memory.

5. The method according to claim 1, **characterized in that** the second storage path is generated on the basis of the first storage path based on a predetermined rule.

6. The method according to claim 1, **characterized in that** the method further comprises, deleting the plaintext data in the memory.

7. The method according to claim 1, **characterized in that** the method further comprises, deleting the ciphertext data in the memory.

8. The method according to claim 1, **characterized in that** the method further comprises, invoking the ciphertext data and the plaintext data in the form of a path.

9. The method according to claim 8, **characterized in that** the form of a path comprises one or more of a shortcut, a path alias, and a soft link.

10. A data decryption method, applied to an electronic device, **characterized by** comprising, receiving a decryption request of a user, wherein the encryption request comprises ciphertext data to be decrypted;
loading the ciphertext data into the memory of the electronic device;
reading a private key and invoking an encryption apparatus to decrypt the ciphertext data based on an asymmetric encryption algorithm to obtain plaintext data, wherein the private key is generated in pair with a public key in the asymmetric encryption algorithm, and the private key is used to decrypt the ciphertext data;
determining a fourth storage path of the ciphertext data and a fifth storage path of the plaintext data;
storing the plaintext data to the fifth storage path; and
deleting the ciphertext data in the fourth storage path.

11. The method according to claim 10, **characterized in that** the public key is stored in the encryption apparatus, and the private key is stored in a peripheral storage device.

12. The method according to claim 10, **characterized in that** the method further comprises, verifying the private key;
in a case where the private key is verified to be invalid, terminating a process and erasing all generated data.

13. The method according to claim 10, **characterized in that** the method further comprises, determining a file extension corresponding to the plaintext data;
based on the file extension, creating a new process and opening the plaintext data in the memory; and
in a case where the process ends, re-encrypting the plaintext data and importing to a sixth storage path.

14. The method according to claim 10, **characterized in that** the fifth storage path is generated on the basis of the fourth storage path based on a predetermined rule.

15. The method according to claim 10, **characterized in that** the method further comprises, deleting the ciphertext data in the memory.

16. The method according to claim 10, **characterized in that** the method further comprises, deleting the plaintext data in the memory.

17. The method according to claim 11, **characterized in that** the peripheral storage device comprises one or more of a USB device, a Lightning interface device, a magnetic interface device, an IC card, and a near field communication device.

18. A data encryption and decryption system, **characterized by** comprising a ciphertext management device, a private key device, and an encryption apparatus, wherein the private key device is used to store a private key, the encryption apparatus is used for encryption and decryption operations and storing a public key, and the ciphertext management device is used to execute the data encryption method of claims 1-9 and the data decryption method of claims 10-17.

19. An electronic device, **characterized in that** the device comprises a memory storing computer-executable instructions and a processor; when the instructions are executed by the processor, the instructions cause the device to implement the method according to any one of claims 1 to 17.

20. A computer-readable storage medium, **characterized in that** the storage medium stores one or more programs, and the one or more programs are executable by one or more processors to implement the method according to any one of claims 1 to 17.

## Amended claims

### Amended claims under Art. 19.1 PCT

1. A data encryption and decryption method, applied to an electronic device, **characterized in that** the method comprises,
invoking ciphertext data and plaintext data in the form of a path, wherein the form of a path comprises one or more of a shortcut, a path alias, and a soft link; wherein a shortcut of the ciphertext data is displayed in a ciphertext management interface;
determining a file extension corresponding to decrypted plaintext data in the memory of the electronic device;
based on the file extension, creating a new process and opening the decrypted plaintext data;
in a case where the process ends, re-encrypting the decrypted plaintext data and importing it to a sixth storage path; wherein
performing real-time monitoring on a corresponding interface of a private key storage device, and when a monitored signal is abnormal, sending a private key verification request to the private key storage device; wherein
if the private key verification is successful, continuing the process; if the private key verification fails, ending the process and erasing all generated data;
in a case where the private key storage device is connected and the private key verification is successful, the electronic device is in an authorized state, otherwise is in a public state; in the authorized state, the ciphertext manager interface displays a part of the decrypted plaintext data in the form of a preview thumbnail, and allowing an encryption operation, a ciphertext-related operation, a decryption operation, and a ciphertext transfer operation; in the public state, not allowing any operation, or only allowing the encryption operation and the ciphertext-related operation;
when the electronic device switches from the authorized state to the public state, deleting data generated in the authorized state, and deleting the displayed preview thumbnail, ending an extra process in the authorized state;
when the electronic device switches from the public state to the authorized state, generating data required for the authorized state, generating and displaying the preview thumbnail, opening an extra process in the authorized state.

2. The method according to claim 1, **characterized in that** the method further comprises:
receiving an encryption request of a user, wherein the encryption request comprises plaintext data to be encrypted;
loading the plaintext data to be encrypted into the memory;
invoking an encryption apparatus to encrypt the plaintext data to be encrypted based on an asymmetric encryption algorithm to obtain the ciphertext data;
determining a first storage path of the plaintext data to be encrypted and a second storage path of the ciphertext data;
storing the ciphertext data to the second storage path; and
deleting the plaintext data to be encrypted in the first storage path.

3. The method according to claim 2, **characterized in that** the second storage path is generated on the basis of the first storage path based on a predetermined rule.

4. The method according to claim 2, **characterized in that** encrypting the plaintext data to be encrypted to obtain the ciphertext data comprises, when the ciphertext data fails to be successfully obtained, deleting the plaintext data to be encrypted in the memory.

5. The method according to claim 1, **characterized in that** the method further comprises:
receiving a decryption request of a user, wherein the decryption request comprises ciphertext data to be decrypted;
loading the ciphertext data into the memory, reading a private key and invoking an encryption apparatus to decrypt the ciphertext data based on an asymmetric encryption algorithm to obtain the decrypted plaintext data;
determining a fourth storage path of the ciphertext data and a fifth storage path of the decrypted plaintext data;
storing the decrypted plaintext data to the fifth storage path; and
deleting the ciphertext data in the fourth storage path.

6. The method according to claim 5, **characterized in that** the fifth storage path is generated on the basis of the fourth storage path based on a predetermined rule.

7. The method according to claim 2 or 5, **characterized in that** a pair of a public key and a private key is generated in the asymmetric encryption algorithm, and the public key is used to encrypt the plaintext data to be encrypted; the public key is stored in the encryption apparatus, and the private key is stored in the private key storage device , which is peripheral.

8. The method according to claim 7, **characterized in that** the method further comprises,
receiving a ciphertext transfer request of a user, wherein the ciphertext transfer request comprises the ciphertext data and a second user;
invoking the encryption apparatus to generate second ciphertext data based on the private key, the ciphertext data and a second public key corresponding to the second user, wherein the second public key is generated in pair with a second private key by using the asymmetric encryption algorithm;
storing the second ciphertext data to a third storage path.

9. The method according to claim 7, **characterized in that** the private key storage device comprises one or more of a USB device, a Lightning interface device, a magnetic interface device, an IC card, and a near field communication device.

10. A data encryption and decryption system, **characterized by** comprising a ciphertext management device, a private key storage device, and an encryption apparatus, wherein the private key storage device is used to store a private key, the encryption apparatus is used for encryption and decryption operations and storing a public key, and the ciphertext management device is used to execute the data encryption and decryption method according to any one of claims 1 to 9.

11. An electronic device, **characterized in that** the device comprises a memory storing computer-executable instructions and a processor; when the instructions are executed by the processor, the instructions cause the device to implement the method according to any one of claims 1 to 9.

12. A computer-readable storage medium, **characterized in that** the storage medium stores one or more programs, and the one or more programs are executable by one or more processors to implement the method according to any one of claims 1 to 9.
